# EUROPÄISCHE PATENTSCHRIFT

(11) **EP 0 391 900 B1**
(45) Veröffentlichungstag und Bekanntmachung des Hinweises auf die Patenterteilung: **17.03.1993**
(21) Anmeldenummer: 88907234.4
(22) Anmeldetag: 30.08.1988
(51) Int. Cl.: H01C 7/04, G01N 27/416

(54) **NTC-TEMPERATURFÜHLER SOWIE VERFAHREN ZUR HERSTELLUNG VON NTC-TEMPERATURFÜHLERELEMENTEN**
NTC TEMPERATURE-SENSING DEVICE AND PROCESS FOR PRODUCING NTC TEMPERATURE-SENSING ELEMENTS
DETECTEUR DE TEMPERATURE NTC ET PROCEDE DE FABRICATION D'ELEMENTS DE DETECTION DE TEMPERATURE NTC

(30) Priorität: 01.10.1987 DE 3733193
(43) Veröffentlichungstag der Anmeldung: 17.10.1990
(73) Patentinhaber: ROBERT BOSCH GMBH, 70442 Stuttgart (DE)
(72) Erfinder: FRIESE, Karl-Hermann, D-7250 Leonberg (DE); STECHER, Günther, D-7140 Ludwigsburg (DE); WIEDENMANN, Hans-Martin, D-7000 Stuttgart 10 (DE)
(86) Internationale Anmeldenummer: DE8800528
(87) Internationale Veröffentlichungsnummer: WO8903115

(56) Entgegenhaltungen:
- EP-A- 0 017 359
- EP-A- 0 142 993
- EP-A- 0 188 900
- Patent Abstracts of Japan, Band 10, Nr. 294 (P-504)(2350) 7. Oktober 1986 & JP, A, 61112958 (FUJI ELECTRIC CO.) 30. Mai 1986
- Patent Abstracts of Japan, Band 10, Nr. 327 (P-513)(2383) 7. November 1986 & JP, A, 61134655 (NGK INSULATORS) 21. Juni 1986
- Patent Abstracts of Japan, Band 10, Nr. 149 (P-461) (2206) 30. Mai 1986 & JP-A-613050 (NIPPON TOKUSHU TOGYO K.K.) 09. Januar 1986

## Beschreibung

### Stand der Technik

Die Erfindung betrifft einen NTC-Temperaturfühler nach der Gattung des Hauptanspruchs sowie Verfahren zur Herstellung von NTC-Temperaturfühlerelementen für den NTC-Temperaturfühler.

Es ist allgemein bekannt, zur Messung von vergleichsweise hohen Temperaturen, wie sie beispielsweise in Abgasen von Verbrennungsmotoren vorherrschen, NTC-Temperaturfühler mit einem in einem Gehäuse angeordneten Temperaturfühlerelement zu verwenden. Zur Herstellung der Temperaturfühlerelemente eignen sich elektronenleitende Oxid-Formkörper, wie auch insbesondere ionenleitende Festelektrolyt-Formkörper, letztere auf Basis von Oxiden vierwertiger Metalle, wie insbesondere ZrO₂, CeO₂, HfO₂ und ThO₂ mit einem bestimmten Gehalt an zweiwertigen Erdalkalioxiden und/oder vorzugsweise dreiwertigen Oxiden der seltenen Erden. Kennzeichnend für derartige Festelektrolyte ist, daß ihr elektrischer Widerstand bei Temperaturen von etwa 300 bis 1200 °C rasch abnimmt.

In einfachster Weise weisen NTC-Temperaturfühlerelemente scheiben-, pillen- oder perlenförmige Widerstands-Formkörper auf, auf dessen einander gegenüberliegenden Seiten Elektroden aus einem leitfähigen Material angebracht sind. Zum Schutze der Widerstands-Formkörper ist es ferner bekannt, sie in gasdichten Gehäusen unterzubringen oder sie mit einer Glasschicht zu überziehen. NTC-Temperaturfühler-elemente des beschriebenen Typs sind beispielsweise aus der DE-AS 24 29 866, den DE-PS 23 21 715 und 23 33 189 sowie der EP-A 0 056 752 bekannt.

Es ist ferner bekannt, zur Bestimmung des λ-Wertes von Gasgemischen planare Abgassensoren zu verwenden, die sich in besonders kostengünstiger Weise in Keramikfolien- und Siebdrucktechnik herstellen lassen. Verwiesen wird diesbezüglich beispielsweise auf die EP-A 0 188 900 und 0 142 993 sowie die DE-OS 30 17 947 und 35 43 759.

Nachteilig an den bekannten oben erwähnten Fühlerelementen ist, daß sie beim Gebrauch zu rasch altern, daß ihre Ansprechzeiten zu lang, ihre Herstellungsweise zu aufwendig und/oder ihre Abmessungen zu groß sind. Besonders nachteilig ist die Abhängigkeit der Widerstandskennlinien solcher NTC-Materialien von der Gaszusammensetzung, insbesonders in reduzierenden Gasen bzw. Gasgemischen, die Sauerstoffdefizite in den oxidischen NTC-Widerstandsmaterialien bewirken können und so deren Widerstandswerte verändern. Besonders die unvermeidliche Diffusion von Wasserstoff durch hochtemperaturfeste Metallgehäuse oder durch Glasumhüllungen verursacht unerwünschte Veränderungen der Widerstandswerte.

### Vorteile der Erfindung

Der erfindungsgemäße Temperaturfühler mit dem hermetisch gegenüber dem Meßgas gekapselten Fühlerelement mit den kennzeichnenden Merkmalen des Hauptanspruches hat gegenüber den bekannten NTC-Temperaturfühlern den Vorteil, daß das Temperaturfühlerelement bei kostengünsgstiger Herstellungsweise keiner Alterung durch Einfluß weschselnder O₂-Partialdrücke unterliegt, eine hohe Alterungsbeständigkeit der Widerstandscharakteristik in fetten und mageren Gasgemischen,z. B. in Kfz- Abgasen bei 300 - 1000 °C aufweist und einen fremdpotentialfreien Aufbau hat, aufgrund seiner geringen Wärmekapazität durch kurze Ansprechzeiten gekennzeichnet ist und sich infolge geringer Abmessungen zum Einbau in sehr enge Gehäuse eignet.

Ein für einen erfindungsgemäßen NTC-Temperaturfühler geeignetes Temperaturfühlerelement läßt sich in bekannter Laminiertechnik aus vergleichsweise dünnen Kermikfolien einer Stärke von insbesondere 0,1 bis 0,6 mm, vorzugsweise von 0,25 bis 0,3 mm, die zuvor in bekannten Dickschichttechniken mit Leiterbahnen und,soweit die Folien nicht aus einen Sauerstoffionen leitenden Festelektrolyten bestehen,gegebenenfalls mit temperaturstabilen NTC-Widerständen beschichtet wurden, herstellen. Die NTC-Widerstände können dabei aus Materialien bestehen, wie sie z. B. aus dem Buch von E.D. Macklen "Thermistors", Verlag Electrochemical Publications Ltd., 1979, S. 138 - 146 bekannt sind.

In Abhängigkeit von der Wahl der zur Herstellung eines Fühlerelementes für einen erfindungsgemäßen NTC-Temperaturfühler verwendeten Folien lassen sich verschiedene Typen von NTC-Temperaturfühlern herstellen. Bevorzugte NTC-Temperaturfühler, die im folgenden näher beschrieben werden sollen, lassen sich grob unterteilen in solche mit NTC-Fühlerelementen aus:
(A) Keramikfolien auf Festelektrolyt-Basis und
(B) Keramikfolien auf Isolatorkeramik-Basis, insbesondere auf Al₂O₃-Basis,

wobei gegebenenfalls auch eine Kombination beider Folientypen möglich ist. Im Fall (A) wird ein Teil des Festelektrolytsubstrates selbst als NTC-Widerstand ausgenutzt, während im Fall (B) ein schichtförmiger NTC-Widerstand, z. B. in Siebdrucktechnik aufgebracht werden muß. Schließlich ermöglicht die verschiedene Art der Sauerstoffversorgung des NTC-Widerstandes die Herstellung von weiteren verschiedenen Typen von NTC-Temperaturfühlern nach der Erfindung. So kann die Sauerstoffversorgung des NTC-Widerstandes in vorteilhafter Weise erfolgen durch
(a) einen Kanal, der durch Ausstanzen oder unter Verwendung eines Hohlraumbildners erzeugt werden kann, und gegebenenfalls eine Füllung aus porösem Material enthalten kann und/oder
(b) im Falle der Verwendung von Keramikfolien auf Festelektrolytbasis durch Schaffung eines Sauerstoff-Reservoirs durch Anordnung von Pumpelektroden.

### (A) Temperaturfühlerelemente aus Keramikfolien auf Festelektrolytbasis

Zur Herstellung dieses Typs von Fühlerelementen geeignete Folien sind bekannt. In typischer Weise können derartige Folien zu etwa 50 bis 97 Mol-% aus ZrO₂, CeO₂, HfO₂ oder ThO₂ und 50 bis 3 Mol-% aus CaO, MgO oder SrO und/oder La₂O₃, Sc₂O₃, Gd₂O₃, Nd₂O₃ und insbesondere Y₂O₃ bestehen. In besonders vorteilhafter Weise lassen sich Folien aus mit Yttrium stabilisiertem ZrO₂, sog. YSZ-Folien verwenden.

Der NTC-Widerstand wird durch Auftrag von 2 Elektroden in definierten Abmessungen auf eine der Folien festgelegt. Die Elektroden müssen porös sein und eine möglichst lange Dreiphasengrenze zwischen Festelektrolyt, Elektrode und gasförmigem Sauerstoff aufweisen. Solche Elektroden lassen sich in bekannter Weise als Pt-Cermet-Elektroden mit einem Sauerstoffionen leitenden Stützgerüst, z. B. aus YSZ-Körnern verwirklichen.

Bei Verwendung von Folien dieses Typs ist es ferner vorteilhaft, zwischen Leiterbahnen und Folienoberfläche eine Isolationsschicht anzuordnen. Eine solche Isolationsschicht kann in vorteilhafter Weise, wie später gezeigt werden wird, aus einer keramischen Al₂O₃-Schicht bestehen. In Verbindung mit Keramikfolien auf YSZ-Basis ist die Verwendung poröser Al₂O₃-Schichten im Hinblick auf die Anpassung der thermischen Ausdehnung zweckmäßig.

Gemäß einer speziellen vorteilhaften Ausgestaltung der Erfindung läßt sich eine solche Isolationsschicht zwischen Leiterbahnen und Festelektrolytsubstrat aber auch durch Einbau von fünfwertigen Metallionen, wie z. B. Nb⁵⁺- und Ta⁵⁺-Ionen in das Wirtsgitter erzeugen. Die Ausbildung einer solchen isolierenden Zwischenschicht läßt sich dadurch erreichen, daß man der zur Ausbildung der Leiterbahnen verwendeten Suspension oder Paste eine oder mehrere Verbindungen mit einem 5- oder höherwertigen Kation zusetzt, daß man beim sich an den Laminierungsprozeß anschließenden Sinterprozeß bei Temperaturen bis zu 1600 °C, vorzugsweise 1350 bis 1500 °C in das Festelektrolytsubstrat eindiffundieren läßt. In entsprechender Weise können auch in den Durchkontaktierungslöchern derartige isolierende Zwischenschichten erzeugt werden.

Zur Herstellung der Leiterbahnen können auf die isolierenden Schichten sowie den Teil der Festelektrolytfolie, die mit den Leiterbahnen den NTC-Widerstand bildet, in üblicher Dickschichttechnik übliche Leiterbahnen erzeugende Massen aufgetragen werden. In vorteilhafter Weise können z. B. Pasten auf Edelmetallbasis, insbesondere Platinbasis oder Edelmetall-Cermetbasis, insbesondere Platin-Cermetbasis verwendet werden. Diese Pasten können in bekannter Weise unter Verwendung von organischen Bindemitteln und/oder Haftverbesserem, Weichmachern und organischen Lösungsmitteln hergestellt werden. Sollen isolierende Zwischenschichten erzeugt werden, so können den Pasten geringere Mengen von Verbindungen mit einem 5-wertigen oder höherwertigen Kation zugesetzt werden, z.B. Nb₂O₅. Als haftverbessernde Zusätze eignen sich z. B. Al₂O₃, ZrO₂ und Silikate.

Durchkontaktierungslöcher können durch einfaches Ausstanzen erzeugt werden. Die Isolierung der Durchkontaktierungslöcher kann z. B. mittels einer isolierenden Al₂O₃-Schicht oder durch Verwendung einer Paste des beschriebenen Typs mit einem 5- oder höherwertigen Kation erfolgen.

Soll zur Sauerstoffversorgung des NTC-Widerstandes Umgebungsluft oder elektrolytisch zugepumpter Sauerstoff über einen Kanal im Laminatverbund zugeführt werden, so kann dieser Kanal in verschiedener Weise erzeugt werden. Eine Möglichkeit besteht darin, die Folie mit den aufgedruckten Leiterbahnen und Durchkontaktierungslöchern mit einer weiteren zweiten Festelektrolyt-Keramikfolie zusammenlaminieren, aus der vor der Laminierung ein Luftkanal ausgestanzt worden ist, der in zweckmäßiger Weise im Bereich der die Elektroden bildenden Leiterbahnen erweitert ist, so daß ein freier Zugang des Luftsauerstoffs zu den Elektroden des NTC-Widerstandes gewährleistet ist. Die hermetische Abdichtung des NTC-Widerstandes kann in einfacher Weise z. B. durch Verwendung einer dritten Festelektrolyt-Keramikfolie erreicht werden, mit der die den ausgestanzten Kanal aufweisende Folie abgedeckt wird.

Der Kanal kann jedoch auch in anderer Weise erzeugt werden. So ist es in vorteilhafter Weise auch möglich, den Kanal sowie gegebenenfalls eine Kanalerweiterung durch Verwendung eines Hohlraumbildners zu erzeugen. Geeignete Hohlraumbildner sind z. B. unter Sinterbedingungen verbrennende, zersetzbare oder verdampfbare Substanzen, z. B. Kunststoffe, z. B. auf Polyurethanbasis, und Salze, z. B. Ammoniumcarbonat, wie auch Thermalrußpulver, das beim Sintern in oxidierender Atmosphäre herausbrennt.

Gegebenenfalls können weitere Schichten am Aufbau des Laminatverbundes beteiligt sein, z. B. haftverbessernde Schichten und abdichtende Schichten. Auch können einzelne Folien des Folienverbundes in vorteilhafter Weise mit abdichtenden Rahmen, z. B. aus ZrO₂-Paste, bedruckt werden.

Die einzelnen Folien lassen sich in vorteilhafter Weise mit interlaminaren Bindern, z. B. auf YSZ-Basis zusammenlaminieren.

Der Laminatverbund wird anschließend gesintert, z. B. durch 1- bis 10-stündiges Erhitzen auf Temperaturen von 1350 bis 1500 °C. Nach, gegebenenfalls jedoch auch bereits vor, Durchführung des Sinterprozesses können im Bereich der Durchkontaktierungslöcher auf der äußeren Folienseite elektrische Kontaktflächen aufgedruckt werden.

Ein Sauerstoff-Reservoir durch Anordnung von Pumpelektroden läßt sich in vorteilhafter Weise dadurch schaffen, daß man auf eine erste Folie mit aufgedruckten Leiterbahnen unter Erzeugung eines Hohlraums über dem NTC-Widerstand eine zweite Folie aus Festelektrolytkeramik auflaminiert, die zuvor beidseitig mit Pumpelektroden und dazu gehörigen Leiterbahnen bedruckt worden ist. Die Leiterbahnen dieser Pumpelektroden können z. B. an eine Batterie mit einer konstanten Arbeitsspannung im Bereich von 0,5 bis 1,0 Volt angeschlossen werden. Die flächenmäßige Ausdehnung der Pumpelektroden kann gering sein. Die Pumpelektroden bestehen vorzugsweise aus einem Metall der Platingruppe oder aus Legierungen von Metallen der Platingruppe mit anderen Metallen. Sie sind vorzugsweise porös. Die zu den Pumpelektroden gehörenden Leiterbahnen bestehen vorzugsweise aus dem gleichen Material wie die Pumpelektroden. Die äußere Pumpelektrode kann mit einer porösen Keramikfolie oder auch einer anderen porösen Schicht, z. B. auf Magnesium-Spinellbasis abgedeckt werden.

### (B) Temperaturfühlerelemente aus Keramikfolien auf Isolatorkeramikbasis

Temperaturfühlerelemente dieses Typs unterscheiden sich von den Temperaturfühlerelementen auf Festelektrolytbasis grundsätzlich dadurch, daß auf eine der zur Herstellung des Laminatverbundes verwendeten Folien nicht nur Leiterbahnen, sondern auch ein NTC-Widerstand aufgedruckt werden muß und daß auf die Anbringung von Isolationsschichten zwischen Folie und Leiterbahnen und in den Durchkontaktierungslöchern verzichtet werden kann. Ein besonders vorteilhafter Typ von Keramikfolien auf Isolatorkeramikbasis sind aufgrund ihrer im Vergleich zur ZrO₂-Kermik hohen Wärmeleitfähigkeit solche auf Al₂O₃-Basis, deren Verwendung zur Herstellung erfindungsgemäßer Temperaturfühler im folgenden beispielsweise beschrieben wird.

Zur Erzeugung des NTC-Widerstandes können einen Festelektrolyten bildende Pasten und Suspensionen verwendet werden, die die zur Herstellung von Festelektrolyten des beschriebenen Typs benötigten Ausgangssubstanzen enthalten und sich durch einen Sinterprozeß in ionenleitende Festelektrolyte überführen lassen. In typischer Weise lassen sich somit zur Herstellung der Pasten und Suspensionen Pulver auf Basis von mit Yttrium stabilisiertem Zirkondioxid verwenden, z. B. ZrO₂-Pulver mit 5 bis 15 Mol-% Y₂O₃. Geeignet sind aber auch elektronenleitende NTC-Widerstandsmaterialien, wie beispielsweise Pulver auf Basis von Praseodymoxid, insbesondere solche aus Gemischen von Praseodymoxid und einem anderen Metalloxid, wie sie z. B. bekannt sind aus der DE-PS 23 33 189 und J.Am.Ceram.Soc. 61, Nr. 7-8, Juli-Aug. 1978, S. 318 ff. Dies bedeutet, daß z. B. auch Pulver auf Basis von Pr-Fe-Oxid oder Fe₂O₃(MnO) verwendet werden können. In ähnlicher Weise können Cr₂O₃/Al₂O₃-NTC-Widerstandsschichten eingesetzt werden, wie sie z. B. in der EP-A 056 752 beschrieben werden.

Die Herstellung eines NTC-Temperaturfühlerelementes aus Keramikfolien auf Al₂O₃-Bais kann somit unter Berücksichtigung der Notwendigkeit des Aufdruckens eines NTC-Widerstandes und unter Verzicht auf die Anbringung isolierender Schichten in der für NTC-Temperaturfühler aus Keramikfolien auf Festelektrolyt-Basis beschriebenen Weise erfolgen. Demzufolge kann somit auch im Falle von Keramikfolien auf Al₂O₃-Bais die Sauerstoffversorgung des NTC-Widerstandes über einen zur Umgebunpsluft offenen bzw. mit porösem Material gefüllten Kanal erfolgen.

Unter porösen Materialien und Stoffen sind hier solche gemeint, die das Eindringen von Verunreinigungen wie z. B. Öldämpfen, Ausdünstungen von Kunststoffbauteilen und reduzierend wirkenden Substanzen verhindern oder zumindest wirksam behindern und dennoch eine ausreichende Sauerstoffversorgung des NTC-Widerstandes ermöglichen. Ein mit einem porösen Material oder Stoff gefüllter Kanal kann dabei in verschiedener Weise erzeugt werden, insbesondere unter Einsatz von Stoffen, die bei der angewandten Sintertemperatur nicht dicht sintern und Porenbildnern, wie z. B. Theobromin oder Thermalruß oder anderen beim Sinterprozeß verbrenn-, verdampf- oder zersetzbaren Stoffen, die durchgehende Porenkanäle bilden. Als Stoffe, die bei der angewandten Sintertemperatur nicht dicht sintern , kommen z. B. in Frage: grobkörniges ZrO₂, Mg-Spinell oder Al₂O₃ mit einer Korngröße von bis zu 10 µm.

In einfachster Weise läßt sich ein NTC-Temperaturfühlerelement aus Keramikfolien auf Al₂O₃-Bais nach der Erfindung somit z. B. dadurch herstellen, daß man aus einer ersten Folie Durchkontaktierungslöcher ausstanzt, auf die Folie danach elektrische Kontaktflächen und Leiterbahnen sowie schließlich einen NTC-Widerstand aufdruckt und auf diese Folie unter Ausbildung eines Hohlraumes über dem NTC-Widerstand, vorzugsweise unter Verwendung eines interlaminaren Binders auf Al₂O₃-Basis eine weitere Keramikfolie auf Al₂O₃-Basis auflaminiert. Der Hohlraum kann dabei in verschiedener Weise erzeugt werden, z. B. durch Verwendung eines Hohlraumbildners des bereits beschriebenen Typs, der bei der Sintertemperatur des Laminatverbundes verdampft, verbrennt oder zersetzt wird oder durch Verwendung einer weiteren zwischengelegten Folie, aus der zuvor ein Luftzuführungskanal ausgestanzt worden ist.

Gemäß einer vorteilhaften Ausgestaltung der Erfindung werden anstatt eines Hohlraumbildners Gemische aus einem Hohlraumbildner und einem Material, das bei der Sintertemperatur des Laminatverbundes noch nicht dicht sintert, verwendet, z. B. Gemische aus einem Hohlraumbildner und Teilchen aus ZrO₂, Mg-Spinell oder Al₂O₃. Auf diese Weise erhält man eine poröse Füllung des Luftraumspaltes, die ein Absinken der Spaltdecke durch plastische Deformationen beim Sinterprozeß und damit ein Schließen des Spaltes verhindert.

Die Sinterung erfolgt in vorteilhafter Weise durch mehrstündiges, z. B. 3-stündiges Erhitzen auf eine Temperatur von bis zu 1600 °C.Bei Zusatz geeigneter Flußmittel, vorzugsweise auf Silikatbasis in ausreichender Menge,
läßt sich die maximal anzuwendende Sintertemperatur auch absenken. Dies gilt in ähnlicher Weise für den Einsatz hochsinteraktiver Al₂O₃-Rohstoffe.

Die elektrischen Kontaktflächen lassen sich auch nach Durchführung des Sinterprozesses aufdrucken und in einem weiteren Sinterprozeß bei vergleichsweise niedrigen Temperaturen einsintern. In diesem Fall können kostengünstige und niederohmige Kontaktmaterialien, z.B. auf Ag-Basis eingesetz werden.

Die beschriebenen NTC-Temperaturfühlerelemente lassen sich in Gehäuse bekannter Bauart und Konstruktion einsetzen, z.B. in solche des aus der DE-OS 32 06 903 bekannten Typs.

Die beschriebenen Temperaturfühlerelemente beider Typen ((A) und (B)) können maschinell im Mehrfachnutzen gefertigt werden, d.h. jeder der oben beschriebenen Verfahrensschritte wird gleichzeitig für eine vorgegebene, größere Anzahl von Temperaturfühlerelementen durchlaufen, wobei von einer entsprechend großen Folie ausgegangen wird, und nach Fertigstellung die einzelnen Temperaturfühlerelemente getrennt werden.

### Zeichnung

Die Figuren dienen der näheren Erläuterung der Erfindung. Im einzelnen sind schematisch dargestellt in:
Fig. 1 ein NTC-Temperaturfühlerelement nach der Erfindung aus Festelektrolytfolien mit ausgestanztem Kanal für die Zufuhr von Umgebungsluft, in dem der NTC-Widerstand durch eine der Folien gebildet wird, in Aufsicht;
Fig.1A ein Schnitt gemäß A-A′ von Fig. 1;
Fig.1B ein Schnitt gemäß B-B′ von Fig. 1;
Fig.2 ein weiteres Temperaturfühlerelement nach der Erfindung aus drei Keramikfolien auf Al₂O₃-Basis mit ausgestanztem Kanal für die Zufuhr von Umgebungsluft mit aufgedrucktem NTC-Widerstand, in Aufsicht;
Fig.2A ein Schnitt gemäß A-A′ von Fig 2;
Fig.2B ein Schnitt gemäß B-B′ von Fig. 2;
Fig.3 ein Schnitt durch ein weiteres NTC-Temperaturfühlerelement nach der Erfindung aus zwei Folien auf Al₂O₃-Basis mit einer Sauerstoffversorgung durch einen Tunnel, der in Dickschichttechnik erzeugt wurde;
Fig. 4 die Anordnung eines zusätzlichen Kontrollwiderstandes, in Aufsicht;
Fig. 5 ein weiteres NTC-Temperaturfühlerelement nach der Erfindung, in dem ein Sauerstoff-Reservoir durch Anordnung von Pumpelektroden aufrechterhalten wird, in Aufsicht;
Fig. 5A eine Seitenansicht des NTC-Temperaturfühlerelementes als Schnittbild gemäß C-C′ von Fig. 5;
Fig. 5B ein Schnitt gemäß A-A′ von Fig. 5;
Fig. 6 die einzelnen Verfahrensschritte zur Herstellung einer vorteilhaften Ausführungsform eines NTC-Temperaturfühlerelementes nach der Erfindung entsprechend Fig. 1 mit drei Folien und in
Fig. 7 die einzelnen Verfahrensschritte zur Herstellung einer zweiten vorteilhaften Ausführungsform eines NTC-Temperaturfühlerelementes nach der Erfindung mit nur zwei Folien und einem Luftzuführungskanal in Siebdrucktechnik.

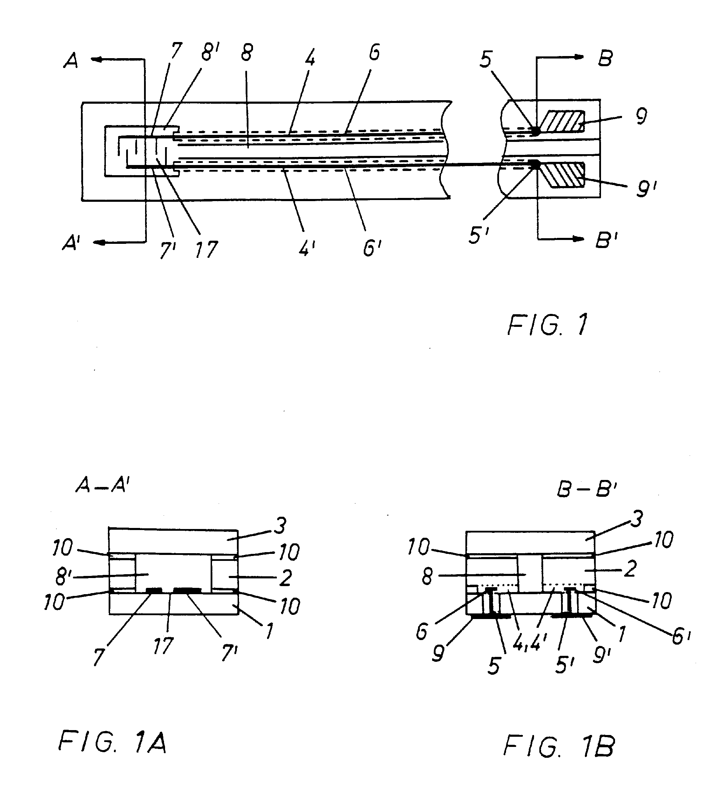

Die in Fig. 1, 1A und 1B schematisch dargestellte Ausführungsform eines erfindungsgemäßen NTC-Temperaturfühlerelementes besteht im wesentlichen aus drei Festelektrolytfolien 1, 2 und 3, z. B. Folien auf Basis von stabilisiertem Zirkoniumdioxid, von denen die Basisfolie 1 ausgestanzte Durchkontaktierungslöcher 5 und 5′ und die mittlere Folie 2 einen ausgestanzten Luftkanal 8 mit der Erweiterung 8′ aufweist, und die Folie 3 im Verbund mit den beiden Folien 1 und 2 den Luftkanal 8 mit der Erweiterung 8′ von oben abdeckt. Zwischen den Leiterbahnen 6 und 6′, z. B. Pt-Leiterbahnen, und den Folien 1 und 2 sind Isolationsschichten oder isolierende Bereiche 4 und 4′ vorgesehen. Die Elektroden 7 und 7′ werden von den Enden der Leiterbahnen 6 und 6′ gebildet. Sie sind im Falle des dargestellten Ausführungsbeispiels miteinander verzahnt ausgestaltet, um den Widerstand zu vermindern. Die Folie 1 bildet mit den Elektroden 7 und 7′ den NTC-Widerstand 17. Das andere Ende der Leiterbahnen 6 und 6′ ist über die Durchkontaktierungen 5 und 5′ an elektrische Kontaktflächen 9 bzw. 9′ angeschlossen. Wie durch 10 angedeutet, sind die drei Folien mittels eines Binders zusammenlaminiert. Der Binder kann beispielsweise aus einem üblichen interlaminaren Binder auf Basis von mit Yttriumoxid stabilisiertem Zirkondioxid bestehen und die Funktion des Dichtrahmens für den Luftkanal übernehmen.

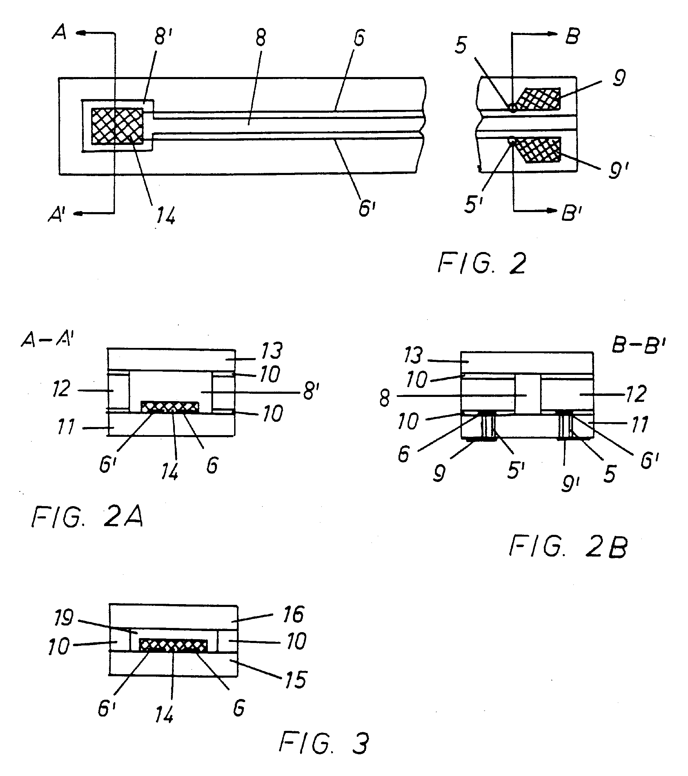

Die in Fig. 2, 2A und 2B schematisch dargestellte Ausführungsform eines NTC-Temperaturfühlerelementes nach der Erfindung unterscheidet sich von der in den Fig. 1, 1A und 1B dargestellten Ausführungsform im wesentlichen dadurch, daß diesmal nicht, wie im Falle der in Fig. 1, 1A und 1B dargestellten Ausführungsform der NTC-Widerstand unter Mitwirkung der Folie 1, sondern von einer aufgedruckten Widerstandsschicht gebildet wird. Im Falle der in den Fig. 2, 2A und 2B dargestellten Ausführungsform bestehen die Folien 11, 12 und 13 aus Folien auf Isolatorkeramikbasis, z. B. auf Al₂O₃-Basis. Demzufolge ist auch keine besondere Isolationsschicht zwischen den Leiterbahnen 6 und 6′ und den Folien 11 und 12 erforderlich. Die aufgedruckte Widerstandsschicht 14 kann z. B. eine Schicht auf Basis von mit Yttrium stabilisiertem Zirkondioxid mit z. B.10 Mol-% Yttriumoxid sein.

In Fig. 3 ist eine Ausführungsform eines erfindungsgemäßen NTC-Temperaturfühlerelementes im Schnitt dargestellt, die aus nur zwei Folien 15 und 16 auf Al₂O₃-Basis gebildet wird. Die mittels eines Binders 10 zusammenlaminierten Folien 15 und 16 bilden einen Tunnel 19, der in Siebdrucktechnik mit herausbrennbaren, verdampfbaren oder zersetzbaren Substanzen des angegebenen Typs erzeugt wird und der gegebenenfalls mit einem porösen Material gefüllt sein kann, über den die Luftzufuhr erfolgt.

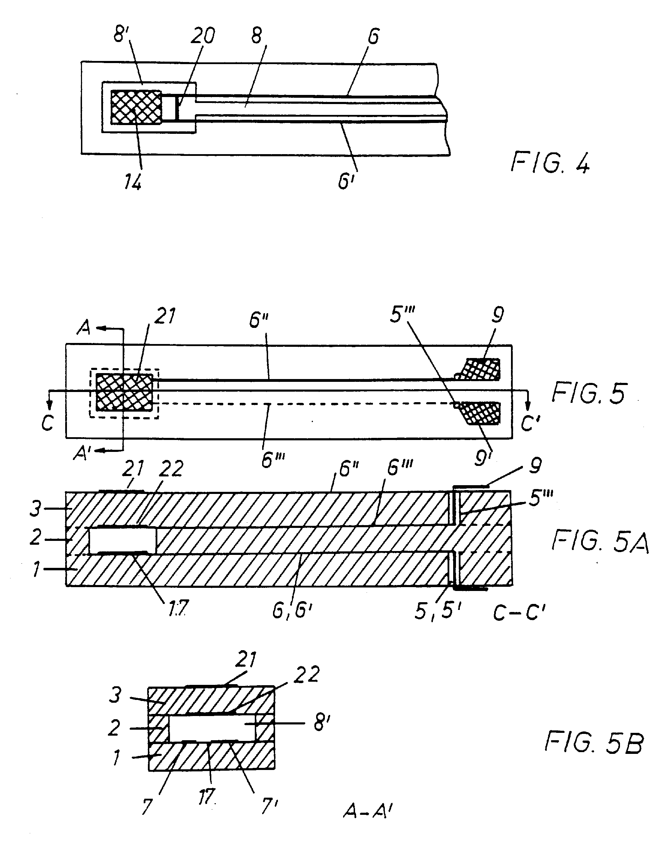

Fig. 4 veranschaulicht die Anordnung eines zusätzlichen Kontrollwiderstandes 20 zwischen den Leiterbahnen 6 und 6′ in der Luftkanalerweiterung 8′ eines erfindungsgemäßen NTC-Temperaturfühlerelementes, z. B. des in Fig. 2 dargestellten Typs. Ein solcher Kontrollwiderstand mit PTC-Charakteristik dient insbesondere zur Überprüfung der Betriebsbereitschaft des NTC-Fühlers bei niedrigen Anwendungstemperaturen, z. B. Raumtemperatur. In vorteilhafter Weise kann es sich bei diesem Widerstand um einen Platin-Cermet Widerstand von z.B. 10 KΩ handeln.

Die in Fig. 5 dargestellte Ausführungsform eines erfindungsgemäßen NTC-Temperaturfühlerelementes aus drei Folien 1, 2 und 3 auf YSZ-Basis weist keinen zur Umgebungsluft offenen Kanal auf. Bei dieser Ausführungsform wird ein Sauerstoffreservoir durch Anordnung von Pumpelektroden 21 und 22, z. B. Platinelektroden aufrechterhalten. Die Pumpelektroden 21 und 22 sind über die Leiterbahnen 6˝ und 6˝′ an eine nicht dargestellte Batterie angeschlossen. Für den NTC-Widerstand 17 und die Leiterbahnen 6, 6′ sind Durchkontaktierungen 5 bzw. 5′ und für die Leiterbahn 6˝′ die Durchkontaktierung 5˝′ vorgesehen.

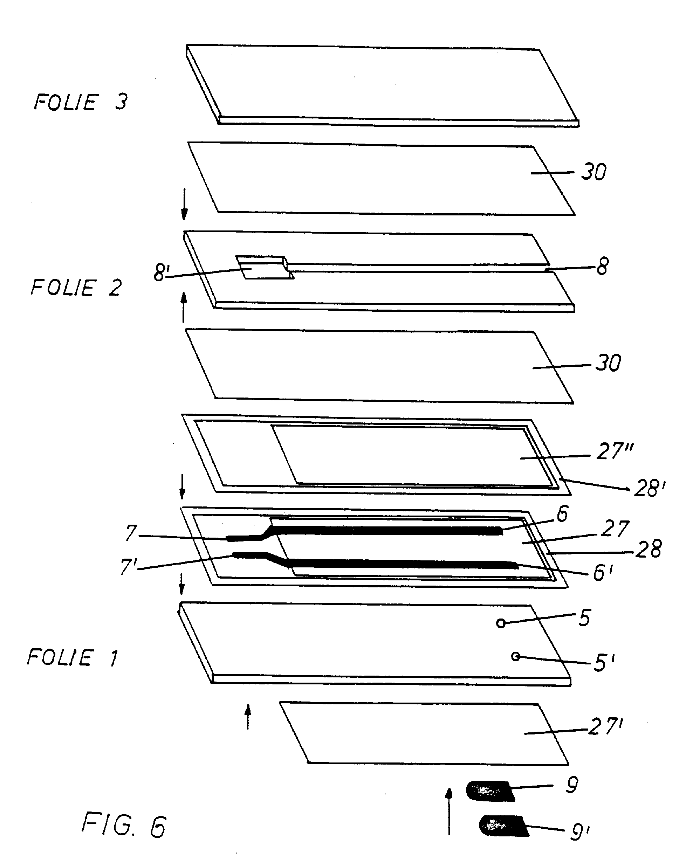

Die Fig. 6 veranschaulicht die stufenweise Herstellung einer vorteilhaften Awführungsform eines erfindungsgemäßen NTC-Temperaturfühlerelementes ausgehend von drei Festelektrolytkeramikfolien 1, 2, 3 im Schema. Danach verfährt man in vorteilhafter Weise derart, daß man
1. auf eine Festelektrolyt-Keramikfolie 1 mindestens im Bereich der aufzudruckenden Leiterbahnen eine isolierende Schicht 27 und auf die Folienrückseite eine gleiche Schicht 27′ aufdruckt, wobei letztere zur Unterdrückung des Sintervorgangs sowie zur Isolation der Anschlußkontakte dient,
2. in die Festelektrolyt-Keramikfolie 1 Durchkontaktierungslöcher 5, 5′ stanzt,
3. in den Durchkontaktierungslöchern 5, 5′ eine Isolierschicht erzeugt und auf die Isolierschicht einen elektrischen Leiter aufbringt,
4. auf die Rückseite der Folie 1 Anschlußkontakte 9, 9′ aufdruckt,
5. auf die Vorderseite der Festelektrolyt-Keramikfolie 1 im Bereich der isolierenden Schicht 27 Leiterbahnen 6, 6′ sowie ferner in nicht isolierten Bereichen Elektroden 7, 7′ und schließlich einen hermetisch abdichtenden Rahmen 28 aufdruckt,
6. auf der bedruckten Seite der Folie 1 die Leiterbahnen 6, 6′ durch Aufdrucken einer isolierenden Schicht 27˝ isoliert, und den hermetisch abdichtenden Rahmen mit dem Aufdrucken der Schicht 28′ verstärkt, um eine für alle Schichten annähernd gleiche Schichtstärke zu erzielen,
7. eine zweite Folie 2 beidseitig mit einem interlaminaren Binder 30, z. B. auf YSZ-Basis, beschichtet und in die beschichtete Folie 2 einen Luftkanal 8 mit einer Erweiterung 8′ einstanzt,
8. die Folie 2 auf die Folie 1 aufbringt,
9. auf die Folie 2 als Deckfolie eine weitere mit einem interlaminaren Binder 30 bedruckte Festelektrolyt-Keramikfolie 3 aufbringt,
10. die Festelektrolyt-Keramikfolien 1, 2 und 3 zusammenlaminiert und
11. den Folienverbund bei einer Temperatur von 1350 bis 1500 °C 1 bis 10 Stunden sintert.

Abweichungen von dieser Verfahrensweise sind möglich. So können beispielsweise die Kontaktflächen 9, 9′ nach dem Sinterprozeß aufgedruckt werden und die isolierende Schicht 27˝ kann z.B. auf die Folie 2 aufgedruckt werden.

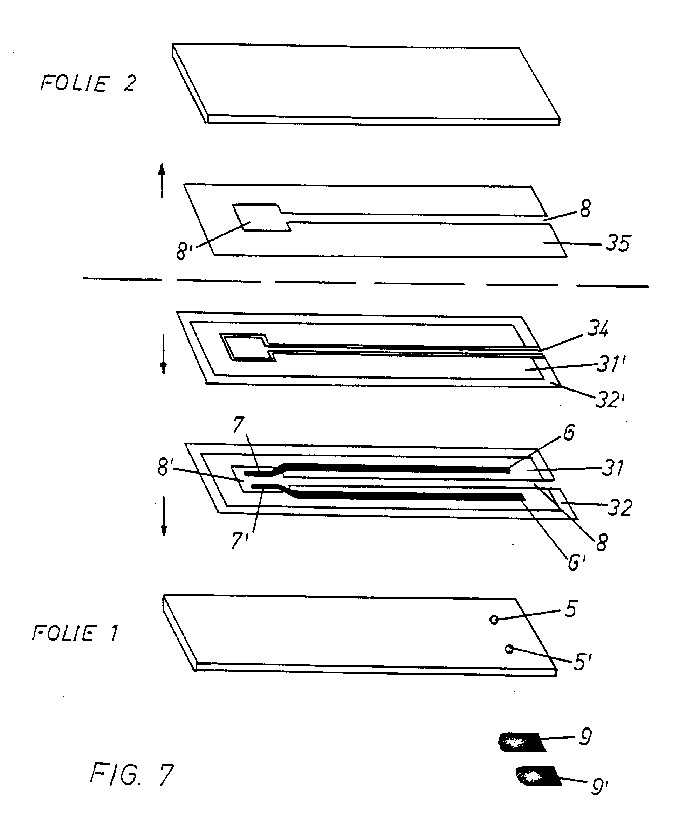

Gemäß einer zweiten besonders vorteilhaften Ausführungsform des erfindungsgemäßen Verfahrens, das schematisch in Fig. 7 dargestellt ist, verfährt man in der Weise, daß man
1. auf eine Festelektrolyt-Keramikfolie 1 zunächst eine isolierende poröse Al₂O₃-Schicht 31 mit Ausspararungen 8, 8′ aufdruckt,
2. in die Folie Durchkontaktierungslöcher 5, 5′ einstanzt, diese isoliert und einen elektrischen Leiter einbringt,
3. auf die Folie 1 Elektroden 7, 7′, Leiterbahnen 6, 6′, einen hermetisch abdichtenden Rahmen 32 sowie eine zweite isolierende Schicht 31′ aufdruckt und schließlich in die Aussparungen 8, 8′ eine Schicht 34 aus einer herausbrennbaren oder abdampfbaren Substanz eindruckt und den hermetisch dichtenden Rahmen mit der Schicht 32′ verstärkt,
4. Kontaktflächen 9, 9′ aufdruckt,
5. auf die Folie 1 eine zweite Festelektrolyt-Keramikfolie 2 mit einer Binderschicht 35, z. B. auf YSZ-Basis mit entsprechenden Aussparungen 8, 8′ aufbringt und die Folien zusammenlaminiert und
6. den Verbundkörper sintert.

Auch im Falle dieser Ausführungsform sind Abweichungen von der beschriebenen Verfahrensweise möglich. Beispielsweise kann in der Verfahrensstufe 3 in die Aussparungen 8 und 8′ ein Gemisch aus einer herausbrennbaren oder abdampfbaren Substanz und Teilchen aus ZrO₂, Mg-Spinell oder Al₂O₃ eingedruckt werden, die beim Sinterprozeß einen porös gefüllten Luftkanal bilden.

Gemäß einer weiteren besonders vorteilhaften Ausführungsform des erfindungsgemäßen Verfahrens verfährt man in der Weise, daß man
1. auf eine Festelektrolyt-Keramikfolie 1 zum Zwecke der Erzeugung von Leiterbahnen eine Paste mit den üblicherweise für die Erzeugung von Leiterbahnen erforderlichen Komponenten, z. B. auf Basis von Pt-Cermet oder Pt-Legierungs-Cermet, mit einem Gehalt an Nb₂O₅ oder einer anderen technisch äquivalenten Verbindung, die 5- oder höherwertige Kationen zum Eindiffundieren in das Foliensubstrat liefert, sowie Elektroden aufdruckt,
2. in die Folie 1 Durchkontaktierungslöcher stanzt,
3. die Durchkontaktierungslöcher isoliert und einen elektrischen Leiter, z. B. des zur Verwendung der Leiterbahnen verwendeten Typs, abscheidet,
4. auf die bedruckte Seite der Folie 1 eine zweite Festelektrolyt-Keramikfolie 2 mit ausgestanztem Luftkanal und einer Kanalerweiterung aufbrringt, derart, daß die Elektroden nicht von der Folie 2 abgedeckt werden,
5. auf die Folie 2 als Deckfolie eine weitere Festelektrolyt-Keramikfolie 3 aufbringt,
6. auf die Rückseite der Folie 1 Kontaktflächen aufdruckt,
7. die Folien 1, 2 und 3 zusammenlaminiert und daß man
8. den Folienverbund bei einer Temperatur von 1350 bis 1500 °C 1 bis 10 Stunden sintert, derart, daß nicht nur ein stabiler Folienverbund erhalten wird, sondern auch soviel 5- oder höherwertige Kationen in das Foliensubstrat diffundiert sind, daß in den Leiterbereichen der Folien isolierende Schichten erhalten werden.

Auch im Falle dieser Ausführungsform können die einzelnen Folien unter Verwendung eines interlaminaren Binders zusammenlaminiert werden.

### Beschreibung der Ausführungsbeispiele

### Beispiel 1

Herstellung einer ersten erfindungs gemäßen Ausführungsform eines NTC-Temperaturfühlerelementes aus Keramikfolien auf Festelektrolytbasis mit ausgestanztem Kanal für die Zufuhr von Umgebungsluft.

Zur Herstellung eines erfindungsgemäßen NTC-Temperaturfühlerelementes des in den Figuren 1 bis 1B schematisch dargestellten Aufbaues wurde,wie in Fig. 6 schematisch veranschaulicht, wie folgt verfahren:
Verwendet wurden drei Keramikfolien 1, 2 und 3 auf YSZ-Basis mit einer Stärke von jeweils 0,3 mm (im ungesinterten Zustand). In einer ersten Verfahrensstufe wurden auf die Basisfolie 1 in den Leiterbahnbereichen 15 bis 20 µm starke Al₂O₃-Isolationsschichten 4 und 4′ aufgedruckt, worauf Durchkontaktierungslöcher 5 und 5′ mit 0,4 mm Durchmesser ausgestanzt und mit einer Al₂O₃-isolationsschicht sowie darüber mit einer elektrisch leitenden Pt/Al₂O₃-Cermetschicht versehen wurden.

In einer zweiten Verfahrensstufe wurden auf die Basisfolie 1 ungefähr 10 - 15 µm dicke Leiterbahnen 6, 6′ aus Pt-Cermet oder Pt-Legierungs-Cermet aufgedruckt. Die die Elektroden 7, 7′ bildenden gleich dicken Enden der Leiterbahnen wurden im vorliegenden Falle rasterförmig gedruckt, um den Widerstand zu vermindern.

Auf die Rückseite der Basisfolie 1 wurden eine Al₂O₃-isolationsschicht und darüber elektrische Kontaktflächen 9 und 9′ gedruckt.

Gleichzeitig wurde aus der Keramikfolie 2, nachdem zuvor auf beide Seiten der Folie ein interlaminarer Binder aufgedruckt worden war, ein Luftkanal 8 mit einer Erweiterung 8′ ausgestanzt. Auf die beim Zusammenlaminieren der Folie 2 mit der Folie 1 mit den Leiterbahnen in Kontakt kommenden Bereiche wurde eine Al₂O₃-isolationsschicht aufgedruckt. Die Folie 2 wurde dann mit der als Deckfolie dienenden Festelektrolytfolie 3 unter Verwendung eines interlaminaren Binders zusammenlaminiert. Der zur Herstellung des NTC-Temperatürfühlers verwendete interlaminare Binder bestand aus den gleichen Rohstoffen und hatte die gleiche Zusammensetzung wie die verwendeten Elektrolytfolien.

Nach Bildung des Verbundkörpers durch Zusammenlaminieren wurde der Körper durch 4-stündiges Erhitzen auf eine Temperatur im Bereich von 1400 °C gesintert.

Das Temperaturfühlerelement wurde in ein Gehäuse des aus der DE-OS 32 06 903 bekannten Typs eingesetzt und zur Temperaturmessung von Abgasen von Verbrennungsmotoren verwendet.

### Beispiel 2

Es wurde wie in Beispiel 1 verfahren, mit dem Unterschied jedoch, daß auf die Anbringung der Al₂O₃-isolationsschicht auf der Basisfolie 1 und die Isolierung der Durchkontaktierungslöcher mittels einer Al₂O₃-isolationsschicht verzichtet wurde. Um eine ausreichende Isolierung der Basisfolie zu erreichen, wurde diesmal zur Erzeugung der Leiterbahnen eine Platin-Cermet-Paste der folgenden Zusammensetzung verwendet:
85 Gew.-Teile Pt-Pulver
12,5 Gew.-Teile Nb₂O₅-Pulver
2,5 Gew.-Teile Al₂O₃-Pulver.

Zur Isolierung der Durchkontaktierungslöcher wurden Pasten gleicher Zusammensetzung verwendet. Mit Erfolg konnte jedoch beispielsweise auch eine Paste mit folgenden Feststoffbestandteilen verwendet werden:
85 Gew.-Teile Pt-Pulver
15 Gew.-Teile Nioboxid Nb₂O₅

Die Elektroden 7, 7′ wurden mit Pt-Cermetpaste ohne Nb₂O₅-Zusatz gedruckt.

### Beispiel 3

Herstellung eines NTC-Temperaturfühlerelements aus Keramikfolien auf Al₂O₃-Basis mit ausgestanztem Kanal für die Zufuhr von Umgebungsluft.

Die Herstellung eines NTC-Temperaturfühlerelementes des schematisch in den Fig. 2 bis 2B dargestellten Typs erfolgte ausgehend von drei Keramikfolien 11, 12, 13 auf Al₂O₃-Basis einer Stärke von jeweils 0,3 mm. Auf die Basisfolie 11 wurden zunächst in Dickschichttechnik Leiterbahnen 6 und 6′ sowie ein NTC-Widerstand 14 aufgedruckt. Zur Erzeugung der Leiterbahnen wurde eine Pt-Cermet-Paste und zur Erzeugung des NTC-Widerstandes 14 wurde eine Paste mit Yttrium stabilisiertem ZrO₂ (10 Mol-% Y₂O₃) verwendet. In einem weiteren Verfahrensschritt wurden in die Folie 11 Durchkontaktierungslöcher 5 und 5′ gestanzt. Die Durchkonttaktierungslöcher wurden mit einer Pt-Al₂O₃-Paste beschichtet. Auf die Rückseite der Folie 11 wurden über die Durchkontaktierungslöcher Kontaktschichten 9,9′ ebenfalls auf Pt-Al₂O₃-Basis aufgedruckt. Gleichzeitig wurde aus einer weiteren Folie 12 auf Al₂O₃-Basis, auf die zuvor beidseitig ein interlaminarer Binder auf Al₂O₃-Basis aufgedruckt worden war, ein Luftkanal 8 mit einer Erweiterung 8′ ausgestanzt. Diese Folie 12 wurde dann mit einer als Deckfolie 13 dienenden Folie auf Al₂O₃-Basis und der Basisfolie 11 zusammenlaminiert.

Der zusammenlaminierte Verbund wurde dann durch 2-stündiges Erhitzen auf Temperaturen im Bereich von 1600 °C gesintert.

Das Temperaturfühlerelement wurde in ein Gehäuse des aus der DE-OS 32 06 903 bekannten Typs eingesetzt und zur Temperaturmessung von Abgasen von Verbrennungsmotoren verwendet.

### Beispiel 4

Es wurden weitere NTC-Temperaturfühlerelemente wie in Beispiel 3 beschrieben hergestellt, wobei jedoch diesmal anstelle des NTC-Widerstandes auf YSZ-Basis solche auf Basis von Cr₂O₃/Al₂O₃-Mischoxid mit einem Anteil von 22 Gew.-% Al₂O₃ verwendet wurden.

### Beispiel 5

Es wurden weitere NTC-Temperaturfühlerelemente wie in Beispiel 3 beschrieben hergestellt, wobei jedoch diesmal anstelle der in Beispiel 3 verwendeten praktisch reinen Al₂O₃-Folien solche mit einem Gehalt an einem silikatischen Flußmittel auf Erdalkalioxid-Silikatbasis verwendet wurden. Der Silikatgehalt der Folien lag bei 5 Gew.-%.

### Beispiel 6

Herstellung einer weiteren erfindungsgemäßen Ausführungsform eines NTC-Temperaturfühlerelementes aus Festelektrolytfolien mit einer Sauerstoffversorgung durch einen Tunnel in Dickschichttechnik, wie in Fig. 7 schematisch dargestellt.

Verwendet wurden zwei Keramikfolien 1 und 2 auf YSZ-Basis mit einer Stärke von jeweils 0,3 mm.

Auf die Folie 1 wurde zunächst eine Aussparungen 8, 8′ aufweisende porös sinternde Al₂O₃-Schicht 31 aufgedruckt. Anschließend wurden Durchkontaktierungslöcher 5 und 5′ ausgestanzt, die mit einer Al₂O₃-Isolationsschicht und einer elektrisch leitenden Pt/Al₂O₃-Cermetschicht versehen wurden. Nunmehr wurden auf die Folie 1 Platin-Cermet-Elektroden 7, 7′ und Leiterbahnen 6, 6′ sowie ein Rahmen 32 aus YSZ-Bindermasse aufgedruckt, worauf in die Aussparungen 8, 8′ eine herausbrennbare oder abdampfbare Substanz, z. B. Thermalruß oder Theobromin eingedruckt wurde. Schießlich wurden zur Isolation der Leiterbahnen eine zweite porös sinternde Al₂O₃-Schicht 31′ und danach ein weiterer Rahmen aus YSZ-Bindermasse aufgedruckt. Auf die Rückseite der Folie 1 wurden Kontaktflächen 9, 9′ aus Pt/Al₂O₃-Cermet-Paste über die Durchkontaktierungslöcher gedruckt. Auf die Folie 2 wurden eine Binderschicht 35 aus YSZ-Bindermasse aufgedruckt, worauf die Folien 1 und 2 zusammenlaminiert wurden. Nach dem Zusammenlaminieren wurde der erhaltene Verbundkörper durch 4-stündiges Erhitzen auf eine Temperatur im Bereich von 1400 °C gesintert, wobei die herausbrennbare oder abdampfbare Substanz unter Ausbildung eines Kanals herausgebrannt bzw. abgedampft wurde.

Das hergestellte Temperaturfühlerelement wurde in ein Gehäuse des aus der DU-OS 32 06 903 bekannten Typs eingesetzt und zur Temperaturmessung von Abgasen von Verbrennungsmotoren verwendet.

### Beispiel 7

Das in Beispiel 6 beschriebene Verfahren wurde dahingehend abgewandelt, daß anstelle des einen Hohltunnel erzeugenden, vollständig verbrennenden Stoffes ein Gemisch aus (a) einem vollständig verbrennbaren Stoff wie Theobromin und (b) aus einem porös sinternden Material, d. h. einem Material, das bei der angewandten Sintertemperatur noch nicht dicht sintert, z. B. aus grobkörnigem ZrO₂, Mg-Spinell oder Al₂O₃ mit einer Korngröße von z. B. bis zu 10 µm verwendet wurden. Auf diese Weise wurden durch den Sinterprozeß ein gefüllter Tunnel erhalten, der das Eindringen von Verunreinigungen wie z. B. Öldämpfen, Ausdünstungen von Kunststoffbauteilen und anderen reduzierenden Substanzen behindert,die die Stabilität des NTC-Widerstandes gefährden können.

### Beispiel 8

Nach dem in Beispiel 6 beschriebenen Verfahren wurde ein weiterer NTC-Temperaturfühler hergestellt, wobei jedoch diesmal im Luftkanal 8 zwischen den beiden Leiterbahnen 6 und 6′ mit diesen ein zusätzlicher Kontrollwiderstand 20 für niedrige Anwendungstemperaturen auf Pt-Cermetbasis auf die Folie 1 von ∼ 10 KΩ aufgedruckt wurde.

### Beispiel 9

Zur Herstellung eines NTC-Temperaturfühlerelementes des schematisch in den Figuren 5 bis 5B dargestellten Typs wurden drei Folien 1, 2 und 3 auf Festelektrolytbasis, z. B. auf YSZ-Basis, verwendet. Auf die Folie 1 wurden nach Aufdrucken einer Al₂O₃-isolationsschicht, die im Bereich der Elektroden ausgespart war, Ausstanzen von Durchkontaktierungslöchern 5, 5′, Isolierung derselben und Aufbringen eines elektrischen Leiters, Aufdrucken von Anschlußkontakten 9, 9′, Leiterbahnen 6, 6′ und unter Ausbildung eines NTC-Widerstandes 17 Elektroden 7, 7′ aufgedruckt.

Auf die Folie 3 wurden nach beidseitigem Bedrucken mit Al₂O₃-Isolationsschichten, die im Bereich der Pumpelektroden ausgespart waren Ausstanzen eines Durchkontaktierungsloches 5˝′ für die Leiterbahn 6˝′ der inneren Pumpelektrode 22, Isolierung desselben und Aufbringen eines elektrischen Leiters Leiterbahnen 6˝ und 6˝′ sowie Pumpelektroden 21 und 22 aufgedruckt.

Nach dem Zusammenlaminieren der Folien 1, 2 und 3 unter Verwendung eines interlaminaren Binders wurde der erhaltene Verbundkörper gesintert.

Auf diese Weise wurde ein NTC-Temperaturfühlerelement mit einem O₂-Reservoir durch elektrisches Pumpen erhalten.

## Patentansprüche

1. NTC-Temperaturfühler für ein Meßgas, insbesondere zur Verwendung in der Abgasanlage von Verbrennungsmotoren, mit einem in einem Gehäuse angeordneten Fühlerelement mit einem NTC-Widerstand und Leiterbahnen, die den NTC-Widerstand mit elektrischen Kontaktflächen verbinden, dadurch gekennzeichnet, daß das Fühlerelement des NTC-Temperaturfühlers aus einem Laminatverbund aus Keramikfolien gebildet wird, derart, daß die Umgebungsluft oder elektrolytisch zugepumpter Sauerstoff über einen gegebenenfalls mit einem porösen Material gefüllten Kanal (8) freien Zugang zu dem NTC-Widerstand (14, 17) hat, dieser selbst jedoch durch den Laminatverbund (Fig. 1A: 1, 2, 3; Fig. 2A: 11, 12, 13, Fig. 3: 10, 15, 16; Fig. 5B, Fig. 6: 1, 2, 3; Fig. 7: 1, 2) sowie durch das Gehäuse hermetisch gegenüber dem Meßgas abgedichtet ist.

2. NTC-Temperaturfühler nach Anspruch 1, dadurch gekennzeichnet, daß der Laminatverbund des Fühlerelementes aus mindestens drei Festelektrolyt-Keramikfolien gebildet wird, nämlich einer Basisfolie (1) mit ausgestanzten Durchkontaktierungslöchern (5, 5′) und in Dickschichttechnik aufgedruckten Leiterbahnen (6, 6′), einer zweiten Folie (2) mit einem gegebenenfalls ausgestanzten Kanal (8) und gegebenenfalls einer Kanalerweiterung (8′) über den Enden der die Elektroden (7, 7′) des NTC-Widerstandes bildenden Leiterbahnen und einer Deckfolie (3).

3. NTC-Temperaturfühler nach Anspruch 2, dadurch gekennzeichnet, daß die Festelektrolyt-Keramikfolien (1), (2) und (3) des Fühlerelementes aus Folien von mit Yttrium stabilisiertem ZrO₂ (YSZ-Folien) bestehen und daß zwischen den Leiterbahnen (6, 6′) einerseits und den Festelektrolytfolien (1) und (2) andererseits isolierende Schichten (4, 4′) angeordnet sind.

4. NTC-Temperaturfühler nach Anspruch 1, dadurch gekennzeichnet, daß die Keramikfolien des Fühlerelementes aus Folien auf Basis von Al₂O₃ bestehen, nämlich einer Basisfolie (11) mit in Dickschichttechnik aufgedruckten Leiterbahnen (6, 6′) und einem aufgedruckten NTC-Widerstand (14), mit dem die Leiterbahnen in elektrischem Kontakt stehen, sowie zwei weiteren Folien (12, 13), die mit der Basisfolie (11) unter Ausbildung eines Kanals (8, 8′) zusammenlaminiert sind.

5. NTC-Temperaturfühler nach Anspruch 4, dadurch gekennzeichnet, daß der NTC-Widerstand aus mit Yttrium stabilisiertem ZrO₂ mit etwa 3 bis 15 Mol-% Y₂O₃ besteht.

6. NTC-Temperaturfühler nach Ansprüchen 4 und 5, dadurch gekennzeichnet, daß ein zusätzlicher Kontrollwiderstand (20) zwischen den beiden Leiterbahnen (6, 6′) des Fühlerelementes angeordnet ist.

7. NTC-Temperaturfühler nach Anspruch 1, dadurch gekennzeichnet, daß der Laminatverbund des Fühlerelementes aus drei zusammenlaminierten Keramikfolien (1, 2, 3) auf Festelektrolytbasis gebildet wird, die einen gegebenenfalls gefüllten Tunnel (8′) über dem NTC-Widerstand (17) bilden, und daß mindestens zwei Pumpelektroden (21, 22) vorgesehen sind, die ein Sauerstoffreservoir in dem Tunnel (8′) durch elektrisches Pumpen aufrechterhalten.

8. NTC-Temperaturfühler nach einem der Ansprüche 1 bis 7, dadurch gekennzeichnet, daß die Keramikfolien des Laminatverbundes mittels eines interlaminaren Binders zusammenlaminiert sind.

9. Verfahren zur Herstellung eines NTC-Temperaturfühlerelementes für einen NTC-Temperaturfühler nach Asprüchen 1 bis 3 und 7 bis 8, dadurch gekennzeichnet, daß man 1. auf eine Festelektrolyt-Keramikfolie im Bereich der aufzudruckenden Leiterbahnen eine isolierende Schicht und auf die Folienrückseite eine entsprechende Schicht aufdruckt; 2. in die Folie Durchkontaktierungslöcher stanzt; 3. in den Durchkontaktierungslöchern eine Isolierschicht erzeugt und auf die Isolierschicht einen elektrischen Leiter aufbringt; 4. auf die Rückseite der Folie Anschlußkontakte aufdruckt; 5. auf die Vorderseite der Folie im Bereich der isolierenden Schicht Leiterbahnen sowie in den für den NTC-Widerstand vorgesehenen nicht isolierten Bereichen Elektroden sowie ferner einen abdichtenden Rahmen aufdruckt; 6. auf der bedruckten Seite der Folien die Leiterbahnen mit einer weiteren Isolierschicht nach oben isoliert und den abdichtenden Rahmen verstärkt; 7. eine zweite Folie beidseitig mit einem interlaminaren Binder beschichtet und in die beschichtete Folie einen Kanal stanzt; 8. die zweite Folie auf die erste Folie aufbringt; 9. auf die zweite Folie eine weitere mit einem interlaminaren Binder bedruckte dritte Folie aufbringt; 10. die Folien zusammenlaminiert und 11. den Folienverbund sintert.

10. Verfahren zur Herstellung eines NTC-Temperaturfühlerelementes für einen NTC-Temperaturfühler nach Ansprüchen 1 bis 3 und 7 bis 8, dadurch gekennzeichnet, daß man 1. auf eine Festelektrolyt-Keramikfolie im Bereich der aufzudruckenden Leiterbahnen eine isolierende Schicht und auf die Folienrückseite eine entsprechende Schicht aufdruckt; 2. in die Folie Durchkontaktierungslöcher stanzt; 3. in den Durchkontaktierungslöchern eine Isolierschicht erzeugt und auf die Isolierschicht einen elekelektrischen Leiter aufbringt; 4. auf die Rückseite der Folie Anschlußkontakte aufdruckt; 5. auf die Vorderseite der Folie im Bereich der isolierenden Schicht Leiterbahnen sowie in den für den NTC-Widerstand vorgesehenen nicht isolierten Bereichen Elektroden sowie ferner einen abdichtenden Rahmen aufdruckt; 6. auf der bedruckten Seite der Folie die Leiterbahnen mit einer weiteren Isolierschicht nach oben isoliert und den abdichtenden Rahmen verstärkt; 7. eine zweite Folie beidseitig mit einem interlaminaren Binder beschichtet und auf die Folie eine Schicht mit einem Hohlraumbildner, der beim Sinterprozeß durch Verbrennen, Verdampfen oder Zersetzung einen Kanal bildet, aufdruckt; 8. die zweite Folie auf die erste Folie aufbringt; 9. die Folien zusammenlaminiert und 10. den Folienverbund sintert.

11. Verfahren zur Herstellung eines NTG-Temperaturfühlerelementes für einen NTC-Temperaturfühler nach Ansprüchen 1, 4 bis 6 und 8, dadurch gekennzeichnet, daß man 1. in eine erste Keramikfolie auf Isolatorkeramikbasis Durchkontaktierungslöcher stanzt; 2. auf die Folienrückseite elektrische Kontaktflächen und auf die Folienvorderseite elektrische Leiterbahnen sowie einen NTC-Widerstand aufdruckt; 3. auf die erste Folie unter Ausbildung eines Hohlraums über dem NTC-Widerstand unter Verwendung eines interlaminaren Binders mindestens eine zweite Folie auf Isolatorkeramikbasis auflaminiert und 4. den Laminatverbund sintert.

12. Verfahren nach Anspruch 11, dadurch gekennzeichnet, daß man als zweite Folie eine Folie mit einer Schicht, die einen Hohlraumbildner enthält, der beim Sinterprozeß durch Verdampfen oder Verbrennen einen Kanal bildet, verwendet.

13. Verfahren nach Ansprüchen 10 mit 12, dadurch gekennzeichnet, daß man als Hohlraumbildner ein Polyurethanpulver, einen Thermalruß oder ein unter Sinterbedingungen verdampf- oder zersetzbares Salz verwendet.

14. Verfahren nach Ansprüchen 9 und 1O, dadurch gekennzeichnet, daß man zur Ausbildung einer isolierenden Schicht zwischen Festelektrolytfolie und Leiterbahnen und/oder in den Durchkontaktierungslöchern aus einer Paste oder Suspension mit einem Gehalt an einem Oxid, Mischoxid, Salz oder einer metallorganischen Verbindung eines 5- oder höherwertigen Metalls ein 5- oder höherwertiges Kation in die Folie eindiffundieren läßt.

15. Verfahren nach Ansprüchen 9 bis 14, dadurch gekennzeichnet, daß man von Keramikfolien einer Stärke von 0,1 bis 0,6 mm ausgeht.

16. Verfahren nach einem der Ansprüche 9 bis 15, dadurch gekennzeichnet, daß man die Temperaturfühlerelemente maschinell in Mehrfachnutzen fertigt.

## Claims

1. NTC temperature sensor for a gas being measured, in particular for use in the exhaust gas system of internal combustion engines, containing a sensing element arranged in a housing with an NTC resistor and-conductor tracks which connect the NTC resistor to electrical contact areas, characterised in that the sensing element of the NTC temperature sensor is formed from a laminated composite of ceramic films in a manner such that the ambient air or oxygen supplied electrolytically by pumping has free access, via a channel (8) optionally filled with a porous material, to the NTC resistor (14, 17), but the latter is itself hermetically sealed with respect to the gas being measured by the laminated composite (Figure 1A: 1, 2, 3; Figure 2A: 11, 12, 13, Figure 3: 10, 15, 16; Figure 5B, Figure 6: 1, 2, 3; Figure 7: 1, 2) and by the housing.

2. NTC temperature sensor according to Claim 1, characterised in that the laminated composite of the sensing element is formed from at least three solid electrolyte ceramic films, namely a base film (1) with punched-out interconnection holes (5, 5′) and conductor tracks (6, 6′) printed on by thick-film technology, a second film (2) having an optionally punched-out channel (8) and optionally a channel enlargement (8′) over the ends of the conductor tracks forming the electrodes (7, 7′) of the NTC resistor, and a covering film (3).

3. NTC temperature sensor according to Claim 2, characterised in that the solid electrolyte ceramic films (1), (2) and (3) of the sensing element are composed of films of ZrO₂ stabilized with yttrium (YSZ films) and in that insulating layers (4, 4′) are disposed between the conductor tracks (6, 6′) on the one hand and the solid electrolyte films (1) and (2) on the other hand.

4. NTC temperature sensor according to Claim 1, characterised in that the ceramic films of the sensing element are composed of films based on Al₂O₃, namely a base film (11) having conductor tracks (6, 6′) printed on by thick-film technology and a printed on NTC resistor (14) which is in electrical contact with the conductor tracks, and also two further films (12, 13) which are laminated together with the base film (11) to form a channel (8, 8′).

5. NTC temperature sensor according to Claim 4, characterised in that the NTC resistor is composed of ZrO₂ stabilized with yttrium and containing about 3 to 15 mol-% of Y₂O₃.

6. NTC temperature sensor according to Claims 4 and 5, characterised in that an additional monitoring resistor (20) is disposed between the two conductor tracks (6, 6′) of the sensing element.

7. NTC temperature sensor according to Claim 1, characterised in that the laminated composite of the sensing element is formed from three ceramic films (1, 2, 3) laminated together and based on a solid electrolyte, which films form an optionally filled tunnel (8′) over the NTC resistor (17), and in that at least two pump electrodes (21, 22) are provided which maintain an oxygen reservoir in the tunnel (8′) by electrolytic pumping.

8. NTC temperature sensor according to one of the Claims 1 to 7, characterised in that the ceramic films of the laminated composite are laminated together by means of an interlaminar binder.

9. Process for producing an NTC temperature sensing element for an NTC temperature sensor according to Claims 1 to 3 and 7 to 8, characterised in that 1. an insulating layer is printed on a solid electrolyte ceramic film in the region of the conductor tracks to be printed on and a corresponding layer is printed on the rear side of the film; 2. interconnection holes are punched in the film; 3. an insulating layer is produced in the interconnection holes and an electrical conductor is deposited on the insulating layer; 4. connecting contacts are printed on the rear side of the film; 5. conductor tracks are printed on the front side of the film in the region of the insulating layer and also electrodes are printed in the uninsulated regions provided for the NTC resistor and also, furthermore, a sealing frame is printed on; 6. on the printed side of the films, the conductor tracks are insulated in the upward direction with a further insulating layer and the sealing frame is reinforced; 7. a second film is coated on both sides with an interlaminar binder and a channel is punched in the coated film; 8. the second film is mounted on the first film; 9. a further, third film printed with an interlaminar binder is mounted on the second film; 10. the films are laminated together and 11. the film composite is sintered.

10. Process for producing an NTC temperature sensing element for an NTC temperature sensor according to Claims 1 to 3 and 7 to 8, characterised in that 1. an insulating layer is printed on a solid electrolyte ceramic film in the region of the conductor tracks to be printed and a corresponding layer is printed on the rear side of the film; 2. interconnection holes are punched in the film; 3. an insulating layer is produced in the interconnecting holes and an electrical conductor is deposited on the insulating layer; 4. connecting contacts are printed on the rear side of the film; 5. conductor tracks are printed on the front side of the film in the region of the insulating layer and also electrodes are printed on the uninsulated regions provided for the NTC resistor and also, furthermore, a sealing frame is printed on; 6. on the printed side of the film, the conductor tracks are insulated in the upward direction with a further insulating layer and the sealing frame is reinforced; 7. a second film is coated on both sides with an interlaminar binder and a layer containing a cavity forming agent which forms a channel by combustion, evaporation or decomposition during the sintering process is printed on the film; 8. the second film is mounted on the first film; 9. the films are laminated together and 10. the film composite is sintered.

11. Process for producing an NTC temperature sensing element for an NTC temperature sensor according to Claims 1, 4 to 6 and 8, characterised in that 1. interconnection holes are punched in a first ceramic film based on an insulator ceramic; 2. electrical contact areas are printed on the rear side of the film and electrical conductor tracks and also an NTC resistor are printed on the front side of the film; 3. at least one second film based on an insulator ceramic is laminated onto the first film to form a cavity above the NTC resistor using an interlaminar binder and 4. the laminated composite is sintered.

12. Process according to Claim 11, characterised in that a film having a layer which contains a cavity forming agent which forms a channel by evaporation or combustion during the sintering process is used as second film.

13. Process according to Claims 10 to 12, characterised in that a polyurethane powder, a thermal soot or a salt which can be evaporated or decomposed under sintering conditions is used as cavity forming agent.

14. Process according to Claims 9 and 10, characterised in that, to form an insulating layer between solid electrolyte film and conductor tracks and/or in the interconnection holes from a paste or suspension having a content of an oxide, mixed oxide, salt or an organometailic compound of a pentavalent metal or metal of higher valency, a pentavalent cation or cation of higher valency is allowed to diffuse into the film.

15. Process according to Claims 9 to 14, characterised in that the starting point is ceramic films having a thickness of 0.1 to 0.6 mm.

16. Process according to one of the Claims 9 to 15, characterised in that the temperature sensing elements are manufactured by machine in multiples.

## Revendications

1. Détecteur de température NTC pour mesurer un gaz pour une application notamment dans la tubulure des gaz d'échappement de moteurs à combustion interne, comportant un élément de détecteur placé dans un boîtier et ayant une résistance NTC ainsi que des chemins conducteurs reliant la résistance NTC à des surfaces de contacts électriques, détecteur caractérisé en ce que l'élément du détecteur de température NTC est formé d'un composé stratifié de feuilles en céramique de manière que l'air ambiant ou l'oxygène pompé de manière électrolytique accède librement à la résistance NTC (14, 17) par un canal (8), le cas échéant rempli d'une matière poreuse, cette résistance étant néanmoins enfermée, de manière hermétique par rapport au gaz de mesure, par la liaison stratifiée (figure 1A: 1, 2, 3 ; figure 2A : 11, 12, 13 ; figure 3 : 10, 15, 16 ; figure 5B, figure 6 : 1, 2, 3 ; figure 7 : 1, 2) ainsi que par le boîtier.

2. Détecteur de température NTC selon la revendication 1, caractérisé en ce que le composé stratifié formant l'élément de détecteur est constitué d'au moins trois feuilles de céramique à électrolyte solide, à savoir une feuille de base (1) dans laquelle ont été estampés des orifices de contact traversants (5, 5′) et des chemins conducteurs (6, 6′) imprimés selon la technique des couches épaisses, d'une seconde feuille (2) avec le cas échéant un canal estampé (8) et le cas échéant une extension de canal (8′) par-dessus les extrémités des chemins conducteurs formant les électrodes (7, 7′) de la résistance NTC et d'une feuille de recouvrement (3).

3. Détecteur de température NTC selon la revendication 2, caractérisé en ce que les feuilles de matière céramique à électrolyte solide (1, 2, 3) de l'élément de détecteur sont des feuilles de ZrO₂ stabilisées avec de l'yttrium (feuilles YSZ) et en ce que, d'une part, entre les chemins conducteurs (6, 6′) et, d'autre part, les feuilles d'électrolyte solide (1) et (2) on a des couches isolantes (4, 4′).

4. Détecteur de température NTC selon la revendication 1, caractérisé en ce que les feuilles de céramique de l'élément de détecteur sont des feuilles à base de Al₂O₃, à savoir une feuille de base (11) avec des chemins conducteurs (6, 6′) imprimés selon la technique des couches épaisses, et une résistance NTC (14) imprimée en étant en contact électrique avec les chemins conducteurs ainsi que deux autres feuilles (12, 13) qui sont réunies par stratification avec la feuille de base (11) pour former un canal (8, 8′).

5. Détecteur de température NTC selon la revendication 4, caractérisé en ce que la résistance NTC est constituée de ZrO₂ stabilisé par de l'yttrium avec une teneur de Y₂O₃ comprise sensiblement entre 3 et 15 % Mol.

6. Détecteur de température NTC selon les revendications 4 et 5, caractérisé par une résistance de contrôle (20) supplémentaire entre les deux chemins conducteurs (6, 6′) de l'élément de détecteur.

7. Détecteur de température NTC selon la revendication 1, caractérisé en ce que le composé obtenu par stratification formant l'élément de détecteur comprend trois feuilles de matière céramique (1, 2, 3) empilées, ces feuilles étant à base d'électrolyte solide et elles forment, au-dessus de la résistance NTC (17), un tunnel (8′), le cas échéant rempli et en ce qu'au moins deux électrodes de pompage (21, 22) sont prévues pour conserver une réserve d'oxygène dans le tunnel (8′) par pompage électrique.

8. Détecteur de température NTC selon l'une des revendications 1 à 7, caractérisé en ce que les feuilles en céramique du composé empilé sont réunies par empilage avec un liant interlaminaire.

9. Procédé de fabrication d'un élément de détecteur de température NTC pour un détecteur de température NTC selon les revendications 1 à 3 et 7 à 8, caractérisé en ce que :
1) sur une feuille de céramique à électrolyte solide, au niveau des chemins conducteurs à imprimer, on imprime une couche isolante et au dos de la feuille on imprime une couche correspondante ;
2) on estampe des orifices de contact traversants dans la feuille.
3) dans les orifices de contact traversants on crée une couche isolante et sur la couche isolante on applique un conducteur électrique ;
4) au dos de la feuille on imprime les contacts de branchement ;
5) sur la face avant de la feuille, au niveau de la couche isolante, on imprime des chemins conducteurs ainsi que les électrodes dans les zones non isolées prévues pour la résistance NTC et, en outre, on imprime un cadre d'étanchéité.
6) sur la face imprimée de la feuille on isole vers le haut les chemins conducteurs à l'aide d'une autre couche isolante et on accentue le cadre d'étanchéité ;
7) on revêt les deux faces d'une seconde feuille d'un liant interlaminaire et on estampe un canal dans la feuille revêtue ;
8) on applique la seconde feuille sur la première feuille ;
9) on applique sur la seconde feuille, une autre troisième feuille imprimée d'un liant interlaminaire ;
10) on empile les feuilles ;
11) on fritte la combinaison de feuilles.

10. Procédé de réalisation d'un élément de détecteur de température NTC pour un détecteur de température NTC selon les revendications 1 à 3 et 7 à 8, caractérisé en ce que :
1) sur une feuille de céramique à électrolyte solide, au niveau des chemins conducteurs à imprimer, on applique une couche isolante et au dos de la feuille on imprime une couche correspondante ;
2) on estampe les orifices de contact traversants dans la feuille ;
3) dans les orifices de contact traversants on crée une couche isolante et sur la couche isolante on applique un conducteur électrique ;
4) au dos de la feuille on imprime des contacts de branchement ;
5) sur la face avant de la feuille, au niveau de la couche isolante, on imprime des chemins conducteurs et des électrodes dans les zones non isolées prévues pour la résistance NTC ainsi qu'un cadre d'étanchéité ;
6) sur la face imprimée de la feuille on isole les chemins conducteurs, vers le haut, par une autre couche isolante et on accentue le cadre d'étanchéité ;
7) on revêt les deux faces d'une seconde feuille avec un liant interlaminaire et sur la feuille on forme une couche avec un générateur de cavité qui forme un canal au moment du frittage, par combustion, vaporisation ou destruction,
8) on applique la seconde feuille sur la première feuille ;
9) on assemble les feuilles par empilage ;
10) on fait fritter l'empilage de feuilles.

11. Procédé de réalisation d'un élément de détecteur de température NTC pour un détecteur de température NTC selon les revendications 1, 4 à 6 et 8, caractérisé en ce que :
1) on matrice dans une première feuille de céramique à base de céramique isolante, des orifices traversants de contact,
2) sur le dos de la feuille on imprime des surfaces de contact électrique et sur la face avant de la feuille on imprime des chemins conducteurs électriques ainsi qu'une résistance NTC ;
3) sur la première feuille, en formant une cavité par-dessus la résistance NTC à l'aide d'un liant interlaminaire on assemble par empilage au moins une seconde feuille à base de céramique isolante et
4) on fait fritter l'assemblage obtenu par empilage.

12. Procédé selon la revendication 11, caractérisé en ce que comme seconde feuille on a une feuille avec une couche contenant un générateur de cavité qui forme un canal pendant l'opération de frittage, par vaporisation ou combustion.

13. Procédé selon les revendications 10 et 12, caractérisé en ce que comme générateur de cavité on utilise une poudre de polyuréthane, du noir de carbone ou un sel qui se vaporise ou se décompose dans des conditions de frittage.

14. Procédé selon les revendications 9 et 10, caractérisé en ce que pour former une couche isolante entre la feuille d'électrolyte solide et les chemins conducteurs et/ou dans les orifices de contact de passage on applique une pâte ou une suspension ayant une teneur en oxyde ou en oxyde mélangé, sel ou une combinaison métallo-organique d'un métal de valence 5 ou plus, pour faire diffuser des cations de valence 5 ou plus dans la feuille.

15. Procédé selon les revendications 9 à 14, caractérisé en ce qu'on utilise des feuilles de céramique d'une épaisseur de 0,1 à 0,6 mm.

16. Procédé selon l'une des revendications 5 à 15, caractérisé en ce qu'on fabrique les éléments de détecteur de température, à la machine par des applications répétées.
